# EUROPEAN PATENT APPLICATION

(11) **EP 4 257 653 A1**
(43) Date of publication of application: **11.10.2023**
(21) Application number: 21899406.9
(22) Date of filing: 07.01.2021
(51) Int. Cl.: C09J 133/24, C09J 177/00, C09J 135/00

(54) **ADHESIVE COMPRISING COPOLYMER HAVING REPEATING UNIT OF AMIDE GROUP AND CARBOXYL GROUP AND/OR AMMONIUM SALT THEREOF, AND WOOD-BASED PANEL USING SAME**

(30) Priority: 02.12.2020 CN 202011390257
(71) Applicant: Beijing University of Chemical Technology, Beijing 100029 (CN)
(72) Inventor: YANG, Wantai, Beijing 100029 (CN); CHEN, Chuxuan, Beijing 100029 (CN); ZHAO, Changwen, Beijing 100029 (CN); XU, Can, Beijing 100029 (CN); CHEN, Dong, Beijing 100029 (CN); MA, Yuhong, Beijing 100029 (CN)
(74) Representative: Steffan & Kiehne Patentanwälte PartG mbB
(86) International application number: PCT/CN2021/070694
(87) International publication number: WO 2022/116362

(57) **Abstract**

The present disclosure relates to an adhesive comprising at least one of the following copolymer A: the copolymer A has at least one repeating unit carrying an amide group and a carboxyl and/or its ammonium salt and at least one other repeating unit different from the one carrying an amide group and a carboxyl and/or its ammonium salt. The present disclosure also relates to an artificial board formed of a lignocellulose material and the adhesive and a method for manufacturing the artificial board.

## Description

### TECHNICAL FIELD

The present disclosure relates to an adhesive comprising a copolymer having at least one repeating unit carrying an amide group and a carboxyl and/or its ammonium salt and other repeating unit. The present disclosure also relates to an artificial board formed of a lignocellulose material and the adhesive, and a method for manufacturing the artificial board.

### TECHNICAL BACKGROUND

In current artificial board production, the "trialdehyde adhesive" (urea-formaldehyde resin, phenol-formaldehyde resin and melamine-formaldehyde resin) prepared with formaldehyde as the raw material occupies a large proportion, exceeding 80%. "Trialdehyde adhesive" is simple to prepare and low in price, but this type of board will release free formaldehyde for a long-time during use, pollute the indoor environment, and seriously threaten the health of residents.

Some documents have proposed solutions to reduce the formaldehyde emission of "trialdehyde adhesive" type artificial boards. For example, CN107033309A attempts to reduce the release of formaldehyde by adjusting the ratio of raw materials and the pH value of each polymerization stage, and adding formaldehyde trapping agents. CN203344147U discloses that active carbon, bamboo charcoal, diatomaceous earth, and the like are mixed in the production of boards to give the boards a certain gas adsorption capacity. However, the above methods do not fundamentally solve the problem, and formaldehyde is still released during use of the boards.

Adhesives prepared based on soy protein, tannin, starch, gelatin and other biomass raw materials do not involve the use of formaldehyde, but the rapid degradation of biomass raw materials brings a problem of easy aging of the board. Although the addition of anti-aging agents can delay degradation to a certain extent, biomass-based adhesives still have problems of high cost and resource, which also limits their practical use.

In addition, polymers such as polyvinyl chloride, high molecular weight polyethylene, neoprene, and the like can also be used for board production, but these polymers are not water-soluble and cannot form water-based adhesives. They can only mix polymers and wood raw materials through hot melt or organic solvents, and still have disadvantages of high cost, energy consumption and not environmental-friendly.

Therefore, it is particularly important to develop a new adhesive for formaldehyde-free artificial board in consideration of safety and environmental-friendly, low production cost, ease of application process and durability of the finished product.

### SUMMARY OF THE INVENTION

In view of the above-mentioned state of the prior art, the inventors of the present invention have conducted extensive and in-depth research on adhesives in the field of artificial board, in order to find an adhesive for artificial board that has no formaldehyde emission, low cost, easy application and excellent performance. The inventors have discovered that an adhesive comprising at least one specific copolymer A not only has no formaldehyde emission, low cost, easy application, but also excellent performance. The copolymer A has at least one repeating unit carrying an amide group and a carboxyl and/or its ammonium salt and other repeating unit.

The present invention has been completed based on the above findings.

An object of the present invention is to provide an adhesive comprising at least one copolymer A which has at least one repeating unit carrying an amide group and a carboxyl and/or its ammonium salt and other repeating unit. The adhesive has the advantages of safety, environmental-friendly, low cost, easy application and excellent performance.

Another object of the present invention is to provide an artificial board formed from a lignocellulose material and the adhesive of the present invention.

Another object of the present invention is to provide a method for manufacturing an artificial board using the adhesive of the present invention.

The technical solutions to achieve the objects of the present invention can be summarized as follows:
1. An adhesive comprising at least one of the following copolymer A:
   the copolymer A has at least one repeating unit carrying an amide group and a carboxyl and/or its ammonium salt and at least one other repeating unit different from the one carrying an amide group and a carboxyl and/or its ammonium salt,
   wherein the other repeating unit is selected from repeating units derived from the following monomers: monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
      or
   the other repeating unit is derived from at least one monomer containing carbon-carbon unsaturated double bond derived from reaction material of gasoline, C₈ fraction, C₉ fraction or coal tar light fraction.
2. The adhesive according to item 1, wherein in the copolymer A, the amount of the repeating units having an amide group and a carboxyl and/or its ammonium salt is 10-80% by weight, or 30-70% by weight, based on the total amount of repeating units of the copolymer A.
3. The adhesive according to item 1 or 2, wherein the other repeating unit of the copolymer A is selected from repeating units derived from the following monomers: monoethylenically unsaturated C₃-C₈ monocarboxylic acid, vinyl alkyl ether having C₁-C₈ alkyl, vinyl ester of C₁-C₂₀ carboxylic acid, and styrene substituted with one or more substituents selected from C₁-C₁₂ alkyl, C₁-C₁₂ alkoxy and halogen, or the other repeating unit is derived from at least one monomer containing carbon-carbon unsaturated double bond derived from reaction materials of gasoline, C₈ fraction, C₉ fraction or coal tar light fraction.
4. The adhesive according to any one of items 1 to 3, wherein the other repeating unit of the copolymer A is derived from at least one monomer containing carbon-carbon unsaturated double bond derived from reaction materials of gasoline, C₈ fraction, C₉ fraction or coal tar light fraction.
5. The adhesive according to any one of items 1 to 4, wherein the copolymer A further comprises an additional repeating unit derived from at least one monomer having at least two non-conjugated carbon-carbon unsaturated double bonds, preferably, the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene.
6. The adhesive according to any one of items 1 to 5, wherein the copolymer A is derived from a copolymer B, which has at least one repeating unit carrying an anhydride group.
7. The adhesive according to any one of items 1 to 6, wherein the copolymer A is derived from a reaction of the copolymer B with ammonia.
8. The adhesive according to item 6 or 7, wherein the anhydride group on the copolymer B is introduced into the copolymer B through polymerization of at least one monomer having a carbon-carbon unsaturated double bond and an anhydride group.
9. The adhesive according to item 8, wherein the monomer having a carbon-carbon unsaturated double bond and an anhydride group is selected from monoethylenically unsaturated dicarboxylic anhydride having 4 to 8 carbon atoms, preferably maleic anhydride, itaconic anhydride, citraconic anhydride, and methylene malonic anhydride, more preferably maleic anhydride.
10. The adhesive according to any one of items 6 to 9, wherein the copolymer B is a copolymer formed from at least one monomer having a carbon-carbon unsaturated double bond and an anhydride group and at least one other monomer having a carbon-carbon unsaturated double bond,
   the at least one other monomer having a carbon-carbon unsaturated double bond is selected from monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
      or
   the other monomer having a carbon-carbon unsaturated double bond is derived from reaction material selected from gasoline, C₈ fraction, C₉ fraction or coal tar light fraction.
11. The adhesive according to any one of items 6 to 10, wherein the copolymer B further comprises an additional repeating unit derived from at least one monomer having at least two non-conjugated carbon-carbon unsaturated double bonds, preferably the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene.
12. The adhesive according to any one of items 1 to 11, wherein the adhesive is in solid form, preferably powder form; or in form of aqueous composition, preferably in form of aqueous solution, preferably a content of the copolymer A is 2-40% by weight, especially 5-30% by weight, based on the total weight of the aqueous composition.
13. The adhesive according to any one of items 1 to 12, wherein the adhesive does not comprise an organic crosslinking agent capable of covalently crosslinking with the amide group and/or carboxyl of the copolymer A.
14. An artificial board formed from a lignocellulose material and the adhesive according to any one of items 1 to 13.
15. The artificial board according to item 14, wherein the adhesive is used in an amount based on solid content of 1-45% by weight, preferably 2-35% by weight, more preferably 3-30% by weight based on the total weight of the artificial board.
16. The artificial board according to item 14 or 15, wherein the copolymer A as defined in any one of items 1 to 12 is used in an amount of 1-40% by weight, preferably 2-30% by weight, more preferably 3-25% by weight, based on the total weight of the artificial board.
17. The artificial board according to any one of items 14 to 16, wherein the adhesive is used as a matrix resin, preferably the adhesive fills a gap between the lignocellulose materials.
18. The artificial board according to any one of items 14 to 17, wherein the artificial board is particle board, plywood, density board, fiber board, straw board or finger joint board.
19. A method for a manufacturing artificial board, which comprises using the adhesive according to any one of items 1 to 13.
20. The method according to item 19, which comprises pressing a mixture of the lignocellulosic material and the adhesive at a temperature of 105 to 300°C and a pressure of 0.4 to 10 MPa, preferably for 2 to 60 minutes, more preferably for 3 to 30 minutes.
21. The method according to item 19 or 20, wherein the artificial board is the artificial board according to any one of items 14 to 18.
22. Use of the adhesive according to any one of items 1 to 13 in manufacture of lignocellulose-based artificial board.

### BRIEF DESCRIPTION OF THE DRAWINGS

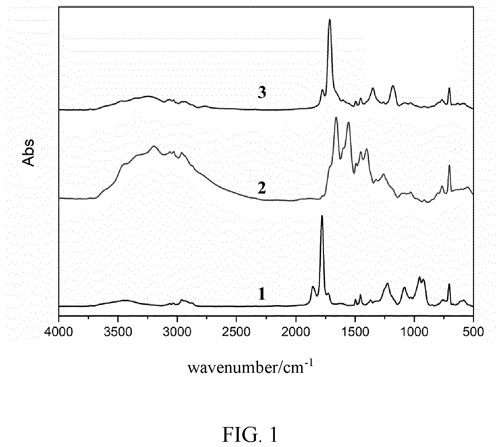

Figure 1. Infrared spectra of different polymers in Example 1: 1: Cs-maleic anhydride copolymer; 2: Cs-maleamic acid copolymer; 3: copolymer in artificial board after hot pressing.

### DETAILED DESCRIPTION OF THE INVENTION

The specific values disclosed herein for related features (including the endpoint values of the disclosed ranges) can be combined with each other to form new ranges.

### Adhesive

One aspect of the present invention relates to an adhesive comprising at least one of the following copolymer A:
the copolymer A has at least one repeating unit carrying an amide group and a carboxyl and/or its ammonium salt and at least one other repeating unit different from the one carrying an amide group and a carboxyl and/or its ammonium salt,
wherein the other repeating unit is selected from repeating units derived from the following monomers: monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
   or
the other repeating unit is derived from at least one monomer containing carbon-carbon unsaturated double bond derived from reaction material of gasoline, C₈ fraction, C₉ fraction or coal tar light fraction.

According to the present invention, part of carboxyl (for example 1 to 10 wt.%) on copolymer A can be in the form of its ammonium salt.

According to an embodiment of the present invention, said other repeating unit of the copolymer A is selected from repeating units derived from the following monomers: monoethylenically unsaturated C₃-C₈ monocarboxylic acid, vinyl alkyl ether having C₁-C₈ alkyl, vinyl ester of C₁-C₂₀ carboxylic acid, and styrene substituted with one or more substituents selected from C₁-C₁₂ alkyl, C₁-C₁₂ alkoxy and halogen.

Those skilled in the art can understand that the expression "derived from" also includes the case where the copolymer has a certain repeating unit, but the repeating unit is not directly formed by the monomer corresponding to the repeating unit. For example, the carboxyethylene repeating unit 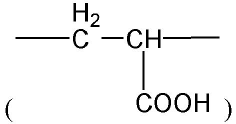 can be derived from polymerization of acrylic acid, or can be derived by polymerizing acrylate and then hydrolyzing.

In a preferred embodiment of the present invention, said other repeating unit of the copolymer A is derived from at least one monomer containing carbon-carbon unsaturated double bond derived from reaction material such as gasoline, C₈ fraction, C₉ fraction or coal tar light fraction. As described in detail below about the copolymer B, gasoline, C₈ fraction, C₉ fraction and coal tar light fraction have monomers containing carbon-carbon unsaturated double bond. These monomers can form repeating units of copolymer A after polymerization.

According to an embodiment of the present invention, the copolymer A further comprises additional repeating unit derived from at least one monomer having at least two (such as 2 to 4) non-conjugated carbon-carbon unsaturated double bonds, preferably, the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene. The amount of the additional repeating unit derived from at least one monomer having at least two non-conjugated carbon-carbon unsaturated double bonds may be 0.1-30% by weight, for example 0.5-20% by weight or 0.5-10% by weight, based on the total amount of repeating units of the copolymer A.

The molecular weight of copolymer A may be any molecular weight suitable for adhesive applications. According to an embodiment of the present invention, the molecular weight of copolymer A may be at least 2,000, for example at least 5,000 or at least 8,000. The upper limit of the molecular weight of copolymer A is not critical, and may be, for example, 500,000 or 300,000. In the case that the copolymer A has a repeating unit derived from C₄-C₂₂ conjugated diene and/or a repeating unit of a monomer having at least two non-conjugated carbon-carbon unsaturated double bonds, the copolymer A may also be crosslinked.

According to the present invention, the amount of repeating units having an amide and a carboxyl group and/or its ammonium salt can be 10-80% by weight, for example 20-75% by weight, 30-70% by weight or 35-65% by weight, based on the total amount of repeating units of the copolymer A.

According to the present invention, the copolymer A may optionally comprise a supplementary repeating unit. The supplementary repeating unit may be selected, for example, from repeating units derived from the following monomers: styrene and C₂-C₂₂ monoolefin.

In one embodiment of the present invention, the copolymer A comprises a repeating unit carrying an amide group and a carboxyl and/or its ammonium salt, said other repeating unit, and said supplementary repeating unit.

In one embodiment of the present invention, the copolymer A comprises a repeating unit carrying an amide group and a carboxyl and/or its ammonium salt, said other repeating unit, said additional repeating unit, and said supplementary repeating unit.

The details of the monomer of the other repeating unit, the monomer of the additional repeating unit, the monomer of the supplementary repeating unit, and the reaction materials are described in detail below as for the copolymer B.

According to a preferred embodiment of the present invention, the copolymer A is derived from the copolymer B, which has at least one repeating unit carrying an anhydride group. In a preferred embodiment, the copolymer A is derived from the reaction of the copolymer B with ammonia.

According to a preferred embodiment of the present invention, the anhydride group on the copolymer B is introduced into the copolymer B through polymerization of at least one monomer having a carbon-carbon unsaturated double bond and an anhydride group. The monomer having a carbon-carbon unsaturated double bond and an anhydride group may be selected from monoethylenically unsaturated dicarboxylic anhydride having 4 to 8 carbon atoms, preferably maleic anhydride, itaconic anhydride, citraconic anhydride, methylene malonic anhydride, and a mixture thereof, more preferably maleic anhydride.

According to a preferred embodiment of the present invention, the copolymer B is a copolymer formed from at least one monomer having a carbon-carbon unsaturated double bond and an anhydride group and at least one other monomer having a carbon-carbon unsaturated double bond,
the at least one other monomer having a carbon-carbon unsaturated double bond is selected from monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
   or
the other monomer having a carbon-carbon unsaturated double bond is derived from reaction material selected from gasoline, C₈ fraction, C₉ fraction or coal tar light fraction.

As examples of monoethylenically unsaturated C₃-C₈ monocarboxylic acids, acrylic acid, methacrylic acid, crotonic acid and vinyl acetic acid can be mentioned, preferably acrylic acid and methacrylic acid.

As examples of C₁-C₁₀ alkyl ester of monoethylenically unsaturated C₃-C₈ monocarboxylic acid, (meth)acrylate alkyl esters of C₁-C₁₀ alkyl can be mentioned, especially methyl methacrylate, methyl acrylate, N-butyl acrylate, ethyl acrylate and 2-ethylhexyl acrylate or a mixture thereof.

As an example of amide of monoethylenically unsaturated C₃-C₈ monocarboxylic acid, (meth)acrylamide can be mentioned in particular.

As vinyl alkyl ether having C₁-C₈ alkyl, preferably vinyl alkyl ether having C₁-C₄ alkyl can be mentioned, such as methyl vinyl ether, ethyl vinyl ether, isobutyl vinyl ether, n-butyl vinyl ether, tert-butyl vinyl ether, n-pentyl vinyl ether, isopentyl vinyl ether, n-hexyl vinyl ether, n-octyl vinyl ether and 2-ethylhexyl vinyl ether.

C₄-C₂₂ conjugated diene may be, for example, C₄-C₁₆ conjugated diene or C₅-C₁₆ conjugated diene, C₄-C₈ conjugated diene or C₅-C₈ conjugated diene. As examples of the conjugated dienes, 1,3-butadiene, 1,3-pentadiene, isoprene, 1,3-hexadiene, cyclopentadiene, methylcyclopentadiene and 1,3-cyclohexadiene, and the like can be mentioned.

For styrene substituted with one or more substituents selected from C₁-C₁₂ alkyl, C₁-C₁₂ alkoxy and halogen, the alkyl or alkoxy group preferably has 1 to 10 carbon atoms, such as 1 to 4 carbon atoms; the halogen is preferably chlorine and bromine. As specific examples, vinyl toluene (such as α-methylstyrene and p-methylstyrene), α-butylstyrene, 4-n-butylstyrene, 4-n-decylstyrene, p-methoxystyrene, chlorostyrene and bromostyrene can be mentioned.

As examples of vinyl ester of C₁-C₂₀ carboxylic acid, vinyl laurate, vinyl stearate, vinyl propionate, vinyl neodecanoate, and vinyl acetate can be mentioned.

Examples of ethylenically unsaturated monomers containing hydroxyl group include C₁-C₁₀ hydroxyalkyl (meth)acrylate, for example, hydroxyethyl acrylate, hydroxyethyl methacrylate, 2-hydroxypropyl acrylate, 3-hydroxypropyl acrylate, 2-hydroxypropyl methacrylate, and 3-hydroxypropyl methacrylate.

As examples of furan ring-containing compounds, a monomer in which the furan ring is substituted with one or more (such as 2 to 4) substituents selected from C₁-C₁₂ alkyl and C₁-C₁₂ hydroxyalkyl can be mentioned, such as furfuryl alcohol. The furan ring may be further fused with a benzene ring, for example, methylbenzofuran.

In a preferred embodiment of the present invention, reaction materials comprising the at least one monomer containing carbon-carbon unsaturated double bond, as well as saturated hydrocarbon and other impurities that do not participate in polymerization can be used directly without separation, such as gasoline, C₈ fraction, C₉ fraction, coal tar light fraction. According to the preferred embodiment, the copolymer B may be a copolymer formed by at least one monomer having a carbon-carbon unsaturated double bond and an anhydride group and at least one monomer containing carbon-carbon unsaturated double bond derived from a reaction material such as gasoline, C₈ fraction, C₉ fraction, and coal tar light fraction. When these reaction materials are used to form copolymer B (for example, by free radical polymerization), a component other than the monomer containing carbon-carbon unsaturated double bond in these reaction materials can be used as solvent in the preparation process. When these fractions are used as reaction materials, the cost of the adhesive and artificial board of the present invention can be further reduced.

The C₈ and C₉ fractions are mainly derived from steam cracking process for ethylene production and naphtha platinum reforming process, and some are derived from toluene disproportionation or transalkylation products and coal tar.

The C₈ fraction usually comprises 22-35% of monoolefins, such as styrene, allylbenzene, vinyl toluene, indene, and methyl indene. Other components in the C₈ fraction include 45-55% aromatic hydrocarbon and about 20% other unknown components.

The C₈ fraction may have the following specific composition:

**Table 1**

| Type | Components | Contents |
|---|---|---|
| monoolefins | styrene, allylbenzene, vinyl toluene, indene, methyl indene | about 30% |
| aromatic hydrocarbon | benzene, toluene, ethylbenzene, m-xylene, o-xylene, p-xylene, tetramethylbenzene, isopropylbenzene, n-propylbenzene, methyl ethyl benzene, trimethylbenzene, indane, naphthalene, tetrahydronaphthalene, α-methyl naphthalene, β-methylnaphthalene | about 50% |
| others | other unknown components | about 20% |

The C₉ fraction usually comprises 20-30% monoolefins (such as styrene, allylbenzene, vinyl toluene, indene) and 8-15% dienes. Other components in the C₉ fraction comprise about 5% of alkanes, 40-50% of aromatic hydrocarbon, and about 10% of other unknown components. The C₉ fraction can have the following specific composition:

**Table 2**

| Type | Components | Contents |
|---|---|---|
| monoolefins | styrene, allylbenzene, vinyl toluene, dihydrodicyclopentadiene, dihydromethyldicyclopentadiene, dihydrodimethyldicyclopentadiene, indene, | about 30% |
| dienes | cyclopentadiene, methylcyclopentadiene, methyldicyclopentadiene | about 10% |
| alkanes | tetrahydrodicyclopentadiene, tetrahydromethyldicyclopentadiene | about 5% |
| aromatic hydrocarbon | toluene, ethylbenzene, m-xylene, o-xylene, p-xylene, isopropylbenzene, n-propylbenzene, methyl ethylbenzene, trimethylbenzene, indane | about 45% |
| others | other unknown components | about 10% |

The light oil components in coal tar mainly comprise styrene, α-methylstyrene, alkylbenzene, vinyl toluene, dicyclopentadiene, benzofuran, indene, methyl indene and methyl benzofuran, and the like, which are mainly used as raw material for dark-light coumarone resin. The coal tar light fraction can have the following specific composition:

**Table 3**

| Components | Contents |
|---|---|
| styrene | 2% |
| α-methylstyrene | 1% |
| alkylbenzene | 30% |
| vinyl toluene | 4% |
| dicyclopentadiene | 5% |
| benzofuran | 7% |
| indene | 48% |
| methyl indene and methyl benzofuran | 3% |

In one embodiment of the present invention, the copolymer B further comprises an additional repeating unit derived from at least one monomer having at least two (such as 2 to 4) non-conjugated carbon-carbon unsaturated double bonds, preferably the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene.

The monomer having at least two non-conjugated carbon-carbon unsaturated double bonds, for example, may be selected from (meth)acrylate of alcohol having at least two hydroxyl groups, vinyl ether of alcohol having at least two hydroxyl groups, allyl ether of alcohol having at least two hydroxyl groups, di(meth)acrylate of ethylene oxide and/or propylene oxide oligomer, vinyl (meth)acrylate, allyl (meth)acrylate, methylenebis(meth)acrylamide, aromatic compound with at least two vinyl groups, and C₅-C₂₂ non-conjugated dienes.

The alcohol having at least two hydroxyl groups may, for example, have 2 to 6, preferably 2 to 4 hydroxyl groups. These alcohols may be selected from diols having 2 to 6 carbon atoms such as ethylene glycol, propylene glycol, butylene glycol, pentylene gylcol and hexylene glycol, glycerol, trimethylolpropane, pentaerythritol, and the like.

Therefore, (meth)acrylate of alcohol having at least 2 hydroxyl groups may be di(meth)acrylate of diol containing 2 to 6 carbon atoms, which may be selected from ethylene glycol diacrylate, ethylene glycol dimethacrylate, 1,2-propylene glycol diacrylate, 1,2-propylene glycol dimethacrylate, butanediol di(meth)acrylate, such as butane-1,4-diol diacrylate, butane-1,4-diol dimethacrylate, hexanediol diacrylate, hexanediol dimethacrylate, neopentyl glycol diacrylate, neopentyl glycol dimethacrylate, 3-methylpentanediol diacrylate and 3-methylpentanediol dimethacrylate.

Examples of di(meth)acrylate of ethylene oxide and/or propylene oxide oligomer are diethylene glycol diacrylate, diethylene glycol dimethacrylate, triethylene glycol diacrylate, triethylene glycol dimethacrylate, tetraethylene glycol diacrylate, and tetraethylene glycol dimethacrylate.

As examples of the aromatic compound having at least two vinyl groups, divinylbenzene, divinyltoluene, trivinylbenzene, divinylnaphthalene, and the like can be mentioned.

C₅-C₂₂ non-conjugated diene (such as C₅-C₁₆ non-conjugated diene or C₅-C₈ non-conjugated diene) can be alkadiene or cyclodiene, as specific examples, it can be mentioned that 1,4-pentadiene, 1,4-hexadiene, 1,5-hexadiene, 1,4-cyclohexadiene, 1,5-cyclooctadiene; and bicyclic olefins having 8 to 20 carbon atoms, preferably 8 to 16 or 8 to 12 carbon atoms, such as dicyclopentadiene monomer, for example, dicyclopentadiene, methyldicyclopentadiene (such as 2-methyldicyclopentadiene, 5-methyldicyclopentadiene), ethyldicyclopentadiene (such as 2-ethyl dicyclopentadiene) and 5,5-dimethyl dicyclopentadiene, and the like.

As other specific examples of monomer having at least two (such as 2 to 4) non-conjugated carbon-carbon unsaturated double bonds, trimethylolpropane tri(meth)acrylate, butylene glycol divinyl ether, trimethylolpropane trivinyl ether, pentaerythritol triallyl ether, methylene bis(meth)acrylamide, diallyl phthalate, and the like can be mentioned.

The amount of additional repeating units derived from at least one monomer having at least two non-conjugated carbon-carbon unsaturated double bonds may be 0.1-30% by weight, for example 0.5-20% by weight or 0.5-10% by weight, based on the total amount of repeating units of the copolymer B.

According to the present invention, the copolymer B may optionally comprise a supplementary repeating unit. The supplementary repeating unit may be selected, for example, from repeating units derived from the following monomers: styrene and C₂-C₂₂ monoolefin.

In one embodiment of the present invention, the copolymer B comprises a repeating unit carrying an anhydride group, said other repeating unit, and said supplementary repeating unit.

In one embodiment of the present invention, the copolymer B comprises a repeating unit carrying an anhydride group, said other repeating unit, said additional repeating unit, and said supplementary repeating unit.

C₂-C₂₂ monoolefin can be alkene and cycloalkene, for example, alkene having 2 to 20 or 5 to 20 carbon atoms, such as 2 to 12 or 5 to 12 carbon atoms, 2 to 8 or 5 to 8 carbon atoms, such as ethylene, propylene, butene, 1-pentene, 2-pentene, 2-methyl-1-butene, 2-methyl-2-butene; cycloalkene having 5 to 20 carbon atoms, preferably 5 to 12 or 5 to 8 carbon atoms, such as cyclopentene, cyclohexene, cycloheptene, and the like; dihydrobicycloalkene having 5 to 20 carbon atoms, preferably 5 to 16 or 8 to 12 carbon atoms, especially dihydrodicyclopentadiene (such as 2,3-dihydrodicyclopentadiene), dihydromethyl dicyclopentadiene and dihydrodimethyldicyclopentadiene, and the like.

The polymerization of monomer having a carbon-carbon unsaturated double bond and an anhydride group and other monomer having a carbon-carbon unsaturated double bond for preparing the copolymer B can be carried out using an oil-soluble free radical initiator. The oil-soluble free radical initiator includes, for example, azo initiator or peroxide initiator. The azo initiator includes: azobisisobutyronitrile, azobisisoheptonitrile, dimethyl azobisisobutyrate, and the like; the peroxide initiator includes: dibenzoyl peroxide, dicumyl peroxide, di(2,4-dichlorobenzoyl) peroxide, di-tert-butyl peroxide, lauryl peroxide, tert-butyl peroxybenzoate, diisopropyl peroxydicarbonate and dicyclohexyl peroxydicarbonate, and the like. The amount of the initiator is 0.05-10% by weight, preferably 0.5-6% by weight, based on the weight of the monomer.

The polymerization reaction can be carried out in the presence of a solvent. The solvent may include aromatic hydrocarbon, mixture of alkane and ketone, carboxylic acid ester, mixture of alkanes and aromatic hydrocarbon, mixture of aromatic hydrocarbon and carboxylic acid ester, or mixture of alkane and carboxylic acid ester, or mixture of alkane, aromatic hydrocarbon and carboxylic acid ester.

As examples of aromatic hydrocarbon, toluene, xylene, ethylbenzene and the like can be mentioned.

Carboxylic acid ester may include C₁-C₈ alkyl ester, phenyl ester or benzyl ester of C₁-C₆ carboxylic acid and C₁-C₈ alkyl ester of aromatic carboxylic acid having 6 to 10 carbon atoms. As specific examples, ester solvents can be mentioned, such as ethyl formate, propyl formate, isobutyl formate, pentyl formate, ethyl acetate, butyl acetate, isobutyl acetate, amyl acetate, isoamyl acetate, benzyl acetate, phenyl acetate, methyl propionate, ethyl propionate, propyl propionate, butyl propionate, methyl butyrate, ethyl butyrate, propyl butyrate, butyl butyrate, isobutyl butyrate, isoamyl butyrate, ethyl isobutyrate, ethyl isovalerate, isoamyl isovalerate, methyl benzoate, ethyl benzoate, propyl benzoate, butyl benzoate, isoamyl benzoate, methyl phenyl acetate, ethyl phenylacetate, propyl phenyl acetate, butyl phenylacetate and isoamyl phenylacetate, and the like.

The ketone in the mixture of alkane and ketone can be selected from acetone, butanone, cyclohexanone, methyl isobutyl ketone, methyl isopropyl ketone, and the alkane can be selected from n-pentane, n-hexane, cyclohexane, n-heptane, n-octane, isooctane and the like. In the mixture of alkane and ketone, the ketone usually accounts for 5-65% by volume.

The polymerization reaction can be carried out in the presence of an inert gas such as nitrogen. The temperature of the polymerization reaction is usually 55 to 120°C, preferably 60 to 100°C; the time of the polymerization reaction is usually 1 to 12 hours, preferably 2 to 8 hours. After the polymerization reaction, the resulting copolymer B can be separated and dried.

In a preferred embodiment, the polymerization reaction is carried out by precipitation polymerization. The precipitation polymerization can be carried out by selecting a solvent that can dissolve the monomer but cannot dissolve the obtained copolymer B. Through precipitation polymerization, the copolymer B in powder form can be directly obtained.

According to the present invention, if gasoline, C₈ fraction, C₉ fraction and coal tar light fraction are used as reaction materials, unreacted mixture of alkane or aromatic hydrocarbon can be separated by simple distillation after completion of the reaction, thereby obtaining various high value-added solvents and industrial raw materials.

According to the present invention, the copolymer B can be reacted with ammonia to obtain the copolymer A (described in further detail below).

The molecular weight of the copolymer B generally corresponds to that of the copolymer A. As mentioned above, the copolymer A can have any molecular weight suitable for adhesive applications. According to an embodiment of the present invention, the molecular weight of the copolymer B may be at least 2,000, for example at least 5,000 or at least 8,000. The upper limit of the molecular weight of the copolymer B is not critical, and may be 500,000, or 300,000, for example. In the case where the copolymer B has a repeating unit derived from C₄-C₂₂ conjugated diene and/or a repeating unit of monomer having at least two non-conjugated carbon-carbon unsaturated double bonds, the copolymer B may be crosslinked.

In the adhesive of the present invention, in addition to the copolymer A, if necessary, the adhesive of the present invention may further comprise at least one additive. The additives may be one or more of the following: oxygen scavenger, emulsifier, dye, pigment, anti-migration aid, UV absorber, biocide, defoamer, colorant, antistatic agent and antioxidant.

According to the present invention, the adhesive of the present invention does not comprise an organic crosslinking agent capable of covalently crosslinking with the amide group and/or carboxyl group of the copolymer A, such as polyol, polyamine, polyalkanolamine or a mixture thereof.

According to the present invention, the adhesive may be in solid form, preferably powder form; or in form of aqueous composition, preferably in form of aqueous solution.

In the adhesive of the present invention, the amount of the copolymer A based on the total amount of the adhesive (if the adhesive is in liquid state, such as an aqueous composition or aqueous solution, based on the solid content) may be 30-100% by weight, such as 50-100% by weight, 60-100% by weight, 70-100% by weight, 80-100% by weight, or 50-98% by weight, or 60-90% by weight.

If the adhesive is in the form of aqueous composition, preferably aqueous solution, the solid content of the adhesive may be 2-40% by weight, or 5-30% by weight, or 8-25% by weight.

### Method for preparing adhesive

One aspect of the present invention relates to a method for preparing the adhesive of the present invention, which comprises reacting the copolymer B with ammonia in the presence or absence of a reaction medium (such as water).

The copolymer B can react with ammonia to produce the copolymer A, that is, ammonolysis. The reaction generally involves reacting the copolymer B at a temperature below 100°C, preferably 15 to 70°C, for example at room temperature in an aqueous medium with ammonia under stirring. The reaction time is usually 0.5 to 10 hours, preferably 1 to 6 hours.

After the reaction, the resulting reaction mixture is usually an aqueous composition, preferably in the form of aqueous solution. The resulting aqueous composition, preferably an aqueous solution, can be used directly as an adhesive. The reaction mixture can also be used as an adhesive after mixing with at least one of the aforementioned additives.

Preferably, the copolymer B is in powder form before reacting with ammonia. Preferably, the copolymer B in powder form can be prepared by precipitation polymerization. The copolymer B in powder form can also be obtained by grinding the copolymer B (e.g., in bulk) into powder form. The average particle size of the copolymer B in powder form may be 0.01 to 10 µm, preferably 0.05 to 8 µm, more preferably 0.1 to 5 µm. The average particle size of the copolymer A in powder form may be 0.01 to 10 µm, preferably 0.05 to 8 µm, more preferably 0.1 to 5 µm.

The reaction time of the copolymer B in solid form with ammonia is usually 2 to 300 minutes, such as 5 to 120 minutes.

In specific applications, the copolymer A in solid form can be dissolved in water, and optionally mixed with at least one of the above additives before application.

The conversion rate of the anhydride groups of the copolymer B generally exceeds 90%, preferably exceeds 95%, and more preferably exceeds 98%, such as 100%.

In the reaction of the copolymer B with ammonia, the carboxyl group can also form an ammonium salt with ammonia.

### Artificial board

Another aspect of the present invention relates to an artificial board formed from a lignocellulose material and the adhesive of the present invention. The artificial board of the present invention should be understood in a broad sense, that is, a board formed from any lignocellulose material and the adhesive of the present invention. The artificial board of the present invention is not limited to those formed only of wood, and may include boards formed of materials such as bamboo and straw as described below. The artificial board of the present invention can be various types of artificial board. In one embodiment, the artificial board includes, but is not limited to, particle board, plywood, fiber board, density board, straw board, and finger joint board.

The lignocellulosic material can be derived from various lignocellulosic materials, such as wood, bamboo, bagasse, straw (such as wheat straw), flax residue, nut shell, grain shell, and the like, and a mixture thereof. The wood includes various softwoods and/or hardwoods.

The lignocellulosic material may be in the form of sawdust, shreds, wood chips, strips, flakes, fibers, sheets, wood dust, shavings, granules, and similar materials, as well as the form of combinations of these materials, such as strips and sawdust.

The lignocellulosic material can be processed by various conventional techniques. Large wood can be processed into wood chips in a round wood chipper. Large pieces of wood and leftovers may be cut into shreds. Large wood may also be chipped in a ring chipper. The large wood is usually peeled before chipping.

The size of the lignocellulosic material is generally not critical. Different sizes can be used for different types of artificial boards. For example, the size of the lignocellulose material can be 1 to 30 mesh, preferably 2 to 15 mesh. For sheet-like lignocellulose materials, the thickness of the sheet may be, for example, 0.5 mm to 5 cm, preferably 1 mm to 3 cm.

In the artificial board of the present invention, the adhesive is used in an amount based on the solid content of 1-45% by weight, preferably 2-40% by weight, more preferably 3-35% by weight or 4-30% by weight, such as 5-25% by weight, 6-25% by weight, 7-25% by weight, 8-19% by weight, based on the total weight of the artificial board.

In the artificial board of the present invention, the copolymer A is used in amount of 1-40% by weight, preferably 2-30% by weight, more preferably 3-25% by weight or 4-20% by weight, such as 5-20 % by weight, 6-20% by weight or 7-18% by weight, based on the total weight of the artificial board.

In the artificial board of the present invention, the adhesive is used as a matrix resin, preferably the adhesive fills the gap between the lignocellulose materials.

### Method for manufacturing artificial board

Another aspect of the present invention relates to a method for manufacturing an artificial board, comprising using the adhesive of the present invention.

According to one embodiment of the present invention, the method comprises pressing a mixture of the lignocellulose material and the adhesive of the present invention at a temperature of 105 to 300°C and a pressure of 0.4 to 10 MPa, preferably pressing for 2 to 60 minutes, more preferably 3 to 30 minutes, for example 5 to 30 minutes.

The mixture of the lignocellulose material and the adhesive of the present invention used for pressing can be prepared by mixing the lignocellulose material with the adhesive of the present invention. When the adhesive is solid, the adhesive can be first dissolved in water and then mixed with the lignocellulose material.

Before pressing, it is preferable to remove part of the water in the mixture of lignocellulose material and adhesive, for example, to reduce the water content of the mixture of lignocellulose material and adhesive to less than 30% by weight, preferably less than 25% by weight, for example less than 22% by weight, or less than 18% by weight. The water content of the mixture is usually higher than 5% by weight or higher than 8% by weight. The removal of the water can be carried out by heating, for example, the heating temperature can be 50 to 90°C, preferably 60 to 80°C.

In a preferred embodiment, the pressing is performed at a temperature of 120 to 220°C and/or a pressure of 1 to 6 MPa.

When the copolymer A has a carboxyl group in the form of its ammonium salt, the ammonium salt of the carboxyl group is decomposed into a carboxyl group again under pressing conditions.

### Use of adhesive

Finally, the present invention also relates to use of the adhesive of the present invention in manufacture of lignocellulose-based artificial board.

The adhesive of the present invention is safe and environmentally friendly, has no release of toxic and harmful substances such as formaldehyde, is simple to apply and has low cost. At the same time, the adhesive of the present invention has excellent performance and is particularly suitable for the manufacture of lignocellulose-based artificial boards. The artificial board manufactured by the adhesive of the present invention has excellent mechanical properties and water resistance. In addition, the adhesive of the present invention can also be prepared from gasoline, C₈ and C₉ fractions, and coal tar light fractions, which is of great significance for broadening the utilization of these industrial mixtures, and artificial boards prepared with adhesive obtained from these industrial mixtures have more excellent mechanical properties and water resistance.

### Examples

The technical solutions of the present invention are further described below in conjunction with specific embodiments of the present invention, but they should not be understood as limiting the protection scope of the present invention. The examples described below are only a part of the examples of the present invention, not all the examples. Based on the examples listed in the present invention, other examples proposed by those skilled in the art without creative work shall fall within the protection scope of the present invention. Unless otherwise specified, the percentages in the examples are percentages by weight, and the parts in the examples are parts by mass.

Source of chemicals used: maleic anhydride (purity 98+%, Alfa Aesar (Tianjin) Chemical Co., Ltd.); dibenzoyl peroxide (purity 97%, Alfa Aesar (Tianjin) Chemical Co., Ltd.); azobisisobutyronitrile (purity 98%, Shanghai Aladdin Biochemical Technology Co., Ltd.); ammonia water (concentration 20-25%, Beijing InnoChem Technology Co., Ltd.); ammonia (purity 99.999%, Beijing Haipu Gas Co., Ltd.); divinylbenzene (purity 80%, Alfa Aesar (Tianjin) Chemical Co., Ltd.); vinyl acetate (purity 99%, Alfa Aesar (Tianjin) Chemical Co., Ltd.); acrylic acid (purity 99.5%, Alfa Aesar (Tianjin) Chemical Co., Ltd.); α-methylstyrene (purity 99%, Alfa Aesar (Tianjin) Chemical Co., Ltd.); other chemical reagents are of analytical grade, purchased from Beijing Yili Fine Chemical Co., Ltd. The composition of C₈ fraction is shown in Table 1; the composition of C₉ fraction is shown in Table 2; the composition of the coal tar light fraction is shown in Table 3.

### Example 1

Based on the mass parts, 100 parts of C₈ fraction, 30 parts of maleic anhydride, 100 parts of xylene and 2 parts of dibenzoyl peroxide (BPO) were mixed and dissolved. The system was vented with nitrogen for 20 minutes and reacted at 70°C for 6 hours to obtain a milky white dispersion system. The product was centrifuged, washed with petroleum ether three times, and dried to obtain a Cs-maleic anhydride copolymer (weight average molecular weight of 45000) as white powder, with a yield of 91%, and the mass percentage of maleic anhydride monomer units in the copolymer was 46%.

10 parts of the Cs-maleic anhydride copolymer, 4 parts of 37% ammonia water, and 88 parts of water were stirred at room temperature for 4 hours to obtain a Cs-maleamic acid copolymer viscous liquid with a mass concentration of 10% (the mole percentage of the monomer unit of maleic anhydride that had been aminolyzed in the copolymer was 99%). The viscous liquid was mixed with poplar wood shavings (5 to 10 mesh, water content of 5%) (8 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 180° C, a pressure of 0.4 MPa, and a hot pressing time of 10 minutes to obtain a particle board with a thickness of 3 mm.

Curve 1 in Figure 1 is the infrared spectrum of the Cs-maleic anhydride copolymer, C=O stretching vibration peaks of the two carbonyl on the anhydride are at 1860 cm⁻¹ and 1780 cm⁻¹, and a strong absorption characteristic of the five-membered ring anhydride is at 940 cm⁻¹.

Curve 2 is the infrared spectrum of the Cs-maleamic acid copolymer. Asymmetric and symmetric stretching vibration peaks of -NH₂ are at 3200 cm⁻¹, and a C=O stretching vibration peak of amide is at 1650 cm⁻¹. Characteristic peaks of the anhydride group corresponding to the original Cs-maleic anhydride copolymer basically disappeared.

Curve 3 is the infrared spectrum of the copolymer after hot pressing. Characteristic absorption of cyclic imide appears at 1770 cm⁻¹ and 1710 cm⁻¹, and characteristic absorption of C-N-C structure is at 1350 cm⁻¹.

### Example 2

Based on the mass parts, 120 parts of C₉ fraction, 40 parts of maleic anhydride, 100 parts of xylene and 4 parts of azobisisobutyronitrile (AIBN) were mixed and dissolved. The system was vented with nitrogen for 20 minutes and reacted at 70°C for 6 hours to obtain a milky white dispersion system. The product was centrifuged, washed with petroleum ether three times, and dried to obtain a C₉-maleic anhydride copolymer as white powder, with a yield of 93%, and the mass percentage of maleic anhydride monomer units in the copolymer was 46%.

15 parts of the C₉-maleic anhydride copolymer, 3 parts of 37% ammonia water, and 82 parts of water were stirred at room temperature for 4 hours to obtain a C₉-maleamic acid copolymer viscous liquid with a mass concentration of 15% (the mole percentage of the monomer unit of maleic anhydride that had been aminolyzed in the copolymer was 98%). The viscous liquid was mixed with poplar wood shavings (5 to 10 mesh, water content of 5%) (12 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 160°C, a pressure of 0.5 MPa, and a hot pressing time of 10 minutes to obtain a particle board with a thickness of 3 mm.

### Example 3

Based on the mass parts, 10 parts of vinyl acetate, 11.5 parts of maleic anhydride, 300 parts of isoamyl acetate and 0.2 parts of AIBN were mixed and dissolved. The system was vented with nitrogen for 20 minutes and reacted at 70°C for 6 hours. The product was centrifuged, washed, and dried to obtain a vinyl acetate-maleic anhydride copolymer (weight average molecular weight of 19,000) as white powder, with a yield of 90%, and the mass percentage of maleic anhydride monomer units in the copolymer was 52%.

15 parts of the vinyl acetate-maleic anhydride copolymer, 5 parts of 37% ammonia water, and 80 parts of water were stirred at room temperature for 4 hours to obtain a vinyl acetate-maleamic acid copolymer viscous liquid with a mass concentration of 15% (the mole percentage of the monomer unit of maleic anhydride that had been aminolyzed in the copolymer was 99%). The viscous liquid was mixed with poplar wood shavings (water content of 5%, 5 to 10 mesh) (10 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 180° C, a pressure of 0.4 MPa, and a hot pressing time of 10 minutes to obtain a particle board with a thickness of 3 mm.

### Example 4

10 parts of methyl vinyl ether-maleic anhydride copolymer (weight average molecular weight of 216,000, purchased from Shanghai Aladdin Biochemical Technology Co., Ltd., mass percentage of maleic anhydride monomer units in the copolymer was 61%) was placed in a round bottom flask, and 10 parts of ammonia gas was introduced to react at 70°C for 2 hours to obtain methyl vinyl ether-maleamic acid copolymer powder. The methyl vinyl ether-maleamic acid copolymer was dissolved in water to obtain a viscous liquid with a mass concentration of 10%. The viscous liquid was mixed with poplar wood shavings (water content of 5%, 5 to 10 mesh) (20 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 170° C, a pressure of 0.4 MPa, and a hot pressing time of 12 minutes to obtain a particle board with a thickness of 3 mm.

### Example 5

Based on mass parts, 100 parts of coal tar light fraction, 25 parts of maleic anhydride, 100 parts of isoamyl acetate and 2 parts of AIBN were mixed and dissolved. The system was vented with nitrogen for 20 minutes and reacted at 70°C for 8 hours. The product was centrifuged, washed, and dried to obtain a coal tar-maleic anhydride copolymer (weight average molecular weight of 11,000) as white powder, with a yield of 90%, and the mass percentage of maleic anhydride monomer units in the copolymer was 42%.

10 parts of the coal tar-maleic anhydride copolymer, 8 parts of 37% ammonia water, and 82 parts of water were stirred at 80°C for 10 minutes to obtain a coal tar- maleamic acid copolymer viscous liquid with a mass concentration of 10% (the mole percentage of the monomer unit of maleic anhydride that had been aminolyzed in the copolymer was 99%). The viscous liquid was mixed with poplar wood shavings (water content of 5%, 5 to 10 mesh) (10 parts of copolymer per 100 parts of shavings), and mixed uniformly to obtain a premix. The premix was dried at 70°C to remove water to water content of 10%.

The premix was placed in a 25 cm × 25 cm × 2.5 cm compression mold at a hot pressing temperature of 160°C, a pressure of 0.4 MPa, and a hot pressing time of 10 minutes to obtain a particle board with a thickness of 3 mm.

### Example 6

Based on the mass parts, 100 parts of styrene, 53 parts of maleic anhydride, 24 parts of acrylic acid, 2,000 parts of dipropylene glycol dimethyl ether and 2 parts of dibenzoyl peroxide (BPO) were mixed and dissolved. The system was vented with nitrogen for 20 minutes and reacted at 80°C for 4 hours to obtain a dispersion system. The product was centrifuged, washed with petroleum ether three times, and dried to obtain a styrene-acrylic acid-maleic anhydride copolymer (reduced viscosity of 25 mL/g) as white powder, with a yield of 82%, and the mass percentage of maleic anhydride monomer units in the copolymer was 29%.

10 parts of the styrene-acrylic acid- maleamic acid copolymer, 5 parts of 37% ammonia water, and 85 parts of water were stirred at room temperature for 4 hours to obtain a styrene-acrylic acid-maleic anhydride copolymer viscous liquid with a mass concentration of 10% (the mole percentage of the monomer unit of maleic anhydride that had been aminolyzed in the copolymer was 99%). The viscous liquid was mixed with poplar wood shavings (water content of 5%, 5 mesh) (10 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 180°C, a pressure of 1 MPa, and a hot pressing time of 10 minutes to obtain a particle board with a thickness of 3 mm.

### Example 7

Based on the mass parts, 10 parts of α-methylstyrene, 9 parts of maleic anhydride, 100 parts of isoamyl acetate and 0.3 parts of AIBN were mixed and dissolved. The system was vented with nitrogen for 20 minutes and reacted at 70°C for 6 hours to obtain a milky white dispersion system. The product was centrifuged, washed with isoamyl acetate three times, and dried to obtain an α-methylstyrene-maleic anhydride copolymer (weight average molecular weight of 27,000) as white powder, with a yield of 42%, and the mass percentage of maleic anhydride monomer units in the copolymer was 45%.

10 parts of the α-methylstyrene-maleic anhydride copolymer, 5 parts of 37% ammonia water, and 85 parts of water were stirred at room temperature for 4 hours to obtain α-methylstyrene-maleamic acid copolymer viscous liquid with a mass concentration of 10% (the mole percentage of the monomer unit of maleic anhydride that had been aminolyzed in the copolymer was 99%). The viscous liquid was mixed with poplar wood shavings (water content of 5%, 5 to 10 mesh) (10 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 180°C, a pressure of 0.4 MPa, and a hot pressing time of 10 minutes to obtain a particle board with a thickness of 3 mm.

### Example 8

Based on the mass parts, 8.5 parts of vinyl acetate, 10 parts of maleic anhydride, 0.3 parts of divinylbenzene, 100 parts of isoamyl acetate and 0.3 parts of AIBN were mixed and dissolved. The system was vented with nitrogen for 20 minutes and reacted at 70°C for 6 hours to obtain a milky white dispersion system. The product was centrifuged, washed with isoamyl acetate three times, and dried to obtain a vinyl acetate-maleic anhydride-divinylbenzene copolymer copolymer as white powder, with a yield of 92%, and the mass percentage of maleic anhydride monomer units in the copolymer was 52%.

10 parts of the vinyl acetate-maleic anhydride-divinylbenzene copolymer, 4 parts of 37% ammonia water, and 86 parts of water were stirred at room temperature for 4 hours to obtain vinyl acetate-maleamic acid-divinylbenzene copolymer viscous liquid with a mass concentration of 10% (the mole percentage of the monomer unit of maleic anhydride that had been aminolyzed in the copolymer was 100%). The viscous liquid was mixed with poplar wood shavings (water content of 5%, 5 to 10 mesh) (9 parts of copolymer per 100 parts of shavings), and mixed uniformly to obtain a premix. The premix was dried at 70°C to remove water to water content of 15%.

The premix was placed in a 25 cm × 25 cm × 2.5 cm compression mold at a hot pressing temperature of 170°C, a pressure of 0.4 MPa, and a hot pressing time of 10 minutes to obtain a particle board with a thickness of 3 mm.

### Example 9

The Cs-maleamic acid copolymer obtained in Example 1 was dissolved in water to obtain a viscous liquid with a mass concentration of 10%. The viscous liquid was evenly coated on a linden wood veneer with a water content of 12% and a size of 160 mm × 160 mm × 1.5 mm in an average coating amount of 60 g/m², which was assembled according to the horizontal pattern-vertical pattern-horizontal pattern, placed in a hot press for pressing at a hot pressing temperature of 180°C, a pressure of 1 MPa, for a hot pressing time of 10 minutes to obtain a three-layer plywood. According to GB/T 9846-2015, the internal bonding strength of the plywood was 1.16 MPa.

### Performance Testing

According to GB/T 4897-2015, the particle boards obtained in Examples 1-8 were tested for internal bonding strength, 24 hours water absorption thickness expansion rate, and moisture resistance (internal bonding strength after boiling water test). The results are listed in Table 4 below.

**Table 4: Performance data of particle boards in Examples 1-8**

| No. | 24 hours water absorption thickness expansion rate (%) | Internal bonding strength (MPa) | Internal bonding strength after boiling water test (MPa) |
|---|---|---|---|
| Example 1 | 15 | 0.86 | 0.45 |
| Example 2 | 16 | 0.83 | 0.38 |
| Example 3 | 18 | 0.51 | 0.15 |
| Example 4 | 19 | 0.49 | 0.11 |
| Example 5 | 16 | 0.78 | 0.54 |
| Example 6 | 19 | 0.44 | 0.12 |
| Example 7 | 15 | 0.68 | 0.41 |
| Example 8 | 15 | 0.79 | 0.36 |

| | | | |
|---|---|---|---|
| *Each data in the table is the average of 6 measurements. | | | |

The various properties of the particle boards in Examples 1-8 were better than the performance requirements of the furniture-type particle board used in the wet state in the national standard. In general, the properties of the artificial boards obtained in Example 1 using the C₈ fraction, Example 2 using the C₉ fraction, and Example 5 using the coal tar light fraction were better than those of the artificial boards obtained in other examples.

Without wishing to be bound by any theory, it is believed that the amide group and carboxyl group on the polymer in the adhesive of the present invention can be dehydrated to produce imide group under pressing conditions, and the carboxyl group can also be dehydrated to produce anhydride group. The anhydride group can react with the hydroxyl group on the lignocellulose material to produce an ester, which helps to improve the mechanical properties and water resistance of the resulting artificial board.

The above are only the preferred embodiments of the present invention. It should be pointed out that for those skilled in the art, several improvements and modifications made within the scope of the principle of the present invention should also be regarded as the protection scope of the present invention.

## Claims

1. An adhesive comprising at least one of the following copolymer A:
the copolymer A has at least one repeating unit carrying an amide group and a carboxyl and/or its ammonium salt and at least one other repeating unit different from the one carrying an amide group and a carboxyl and/or its ammonium salt,
wherein the other repeating unit is selected from repeating units derived from the following monomers: monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
or
the other repeating unit is derived from at least one monomer containing carbon-carbon unsaturated double bond derived from reaction material of gasoline, C₈ fraction, C₉ fraction or coal tar light fraction.

2. The adhesive according to claim 1, wherein in the copolymer A, the amount of the repeating units having an amide group and a carboxyl and/or its ammonium salt is 10-80% by weight, or 30-70% by weight, based on the total amount of repeating units of the copolymer A.

3. The adhesive according to claim 1 or 2, wherein the other repeating unit of the copolymer A is selected from repeating units derived from the following monomers: monoethylenically unsaturated C₃-C₈ monocarboxylic acid, vinyl alkyl ether having C₁-C₈ alkyl, vinyl ester of C₁-C₂₀ carboxylic acid, and styrene substituted with one or more substituents selected from C₁-C₁₂ alkyl, C₁-C₁₂ alkoxy and halogen, or the other repeating unit is derived from at least one monomer containing carbon-carbon unsaturated double bond derived from reaction materials of gasoline, C₈ fraction, C₉ fraction or coal tar light fraction.

4. The adhesive according to any one of claims 1 to 3, wherein the other repeating unit of the copolymer A is derived from at least one monomer containing carbon-carbon unsaturated double bond derived from reaction materials of gasoline, C₈ fraction, C₉ fraction or coal tar light fraction.

5. The adhesive according to any one of claims 1 to 4, wherein the copolymer A further comprises an additional repeating unit derived from at least one monomer having at least two non-conjugated carbon-carbon unsaturated double bonds, preferably, the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene.

6. The adhesive according to any one of claims 1 to 5, wherein the copolymer A is derived from a copolymer B, which has at least one repeating unit carrying an anhydride group.

7. The adhesive according to any one of claims 1 to 6, wherein the copolymer A is derived from a reaction of the copolymer B with ammonia.

8. The adhesive according to claim 6 or 7, wherein the anhydride group on the copolymer B is introduced into the copolymer B through polymerization of at least one monomer having a carbon-carbon unsaturated double bond and an anhydride group.

9. The adhesive according to claim 8, wherein the monomer having a carbon-carbon unsaturated double bond and an anhydride group is selected from monoethylenically unsaturated dicarboxylic anhydride having 4 to 8 carbon atoms, preferably maleic anhydride, itaconic anhydride, citraconic anhydride, and methylene malonic anhydride, more preferably maleic anhydride.

10. The adhesive according to any one of claims 6 to 9, wherein the copolymer B is a copolymer formed from at least one monomer having a carbon-carbon unsaturated double bond and an anhydride group and at least one other monomer having a carbon-carbon unsaturated double bond,
the at least one other monomer having a carbon-carbon unsaturated double bond is selected from monoethylenically unsaturated C₃-C₈ monocarboxylic acid, C₁-C₁₀ alkyl ester of monoethylenically unsaturated C₃-C₈ monocarboxylic acid, amide of monoethylenically unsaturated C₃-C₈ monocarboxylic acid, vinyl alkyl ether having C₁-C₈ alkyl, C₄-C₂₂ conjugated diene, styrene substituted with one or more substituents selected from C₁-C₁₂ alkyl, C₁-C₁₂ alkoxy and halogen, vinyl ester of C₁-C₂₀ carboxylic acid, vinyl pyrrolidone, (meth)acrylonitrile, hydroxy-containing ethylenically unsaturated monomer, N-vinyl formamide, vinyl imidazole, allylbenzene, indene, methyl indene, and a furan ring-containing compound,
or
the other monomer having a carbon-carbon unsaturated double bond is derived from reaction material selected from gasoline, C₈ fraction, C₉ fraction or coal tar light fraction.

11. The adhesive according to any one of claims 6 to 10, wherein the copolymer B further comprises an additional repeating unit derived from at least one monomer having at least two non-conjugated carbon-carbon unsaturated double bonds, preferably the non-conjugated carbon-carbon unsaturated double bond in the monomer having at least two non-conjugated carbon-carbon unsaturated double bonds is selected from non-conjugated carbon-carbon double bonds in (meth)acrylate group, (meth)acrylamide group, vinyl, allyl, and alkene or cycloalkene.

12. The adhesive according to any one of claims 1 to 11, wherein the adhesive is in solid form, preferably powder form; or in form of aqueous composition, preferably in form of aqueous solution, preferably a content of the copolymer A is 2-40% by weight, especially 5-30% by weight, based on the total weight of the aqueous composition.

13. The adhesive according to any one of claims 1 to 12, wherein the adhesive does not comprise an organic crosslinking agent capable of covalently crosslinking with the amide group and/or carboxyl of the copolymer A.

14. An artificial board formed from a lignocellulose material and the adhesive according to any one of claims 1 to 13.

15. The artificial board according to claim 14, wherein the adhesive is used in an amount based on solid content of 1-45% by weight, preferably 2-35% by weight, more preferably 3-30% by weight based on the total weight of the artificial board.

16. The artificial board according to claim 14 or 15, wherein the copolymer A as defined in any one of claims 1 to 12 is used in an amount of 1-40% by weight, preferably 2-30% by weight, more preferably 3-25% by weight, based on the total weight of the artificial board.

17. The artificial board according to any one of claims 14 to 16, wherein the adhesive is used as a matrix resin, preferably the adhesive fills a gap between the lignocellulose materials.

18. The artificial board according to any one of claims 14 to 17, wherein the artificial board is particle board, plywood, density board, fiber board, straw board or finger joint board.

19. A method for a manufacturing artificial board, which comprises using the adhesive according to any one of claims 1 to 13.

20. The method according to claim 19, which comprises pressing a mixture of the lignocellulosic material and the adhesive at a temperature of 105 to 300°C and a pressure of 0.4 to 10 MPa, preferably for 2 to 60 minutes, more preferably for 3 to 30 minutes.

21. The method according to claim 19 or 20, wherein the artificial board is the artificial board according to any one of claims 14 to 18.

22. Use of the adhesive according to any one of claims 1 to 13 in manufacture of lignocellulose-based artificial board.
